Europäisches Patentamt

European Patent Office

Office européen des brevets

(19)

(11) Veröffentlichungsnummer: **0 393 535 B1**

(12) **EUROPÄISCHE PATENTSCHRIFT**

(45) Veröffentlichungstag der Patentschrift: **02.03.94**

(51) Int. Cl.5: **B29B 17/00**, C08J 11/06, //C08L21/00

(21) Anmeldenummer: **90107111.8**

(22) Anmeldetag: **12.04.90**

(54) **Verfahren zur Wiedergewinnung von Gummiabfällen.**

(30) Priorität: **18.04.89 DE 3912677**

(43) Veröffentlichungstag der Anmeldung:
**24.10.90 Patentblatt 90/43**

(45) Bekanntmachung des Hinweises auf die Patenterteilung:
**02.03.94 Patentblatt 94/09**

(84) Benannte Vertragsstaaten:
**AT BE CH DE ES FR GB IT LI NL SE**

(56) Entgegenhaltungen:
**AT-A- 342 319**
**DD-A- 248 367**
**DE-A- 3 719 291**
**US-A- 4 353 752**

**GATTO, J.V. and S.R. HAGUE: "Materials and Compounding Ingredients for Rubber", 1970, RUBBER WORLD MAGAZINE, New York, N.Y.**

**DATABASE WPIL, acc.no.81-78819d, Derwent Publications Ltd, London, GB; & JP-A-56116768 (MATSUSHITA ELEC. WORKS) 12-09-1981**

(73) Patentinhaber: **PHOENIX AKTIENGESELL-SCHAFT**
**Hannoversche Strasse 88**
**D-21079 Hamburg(DE)**

(72) Erfinder: **Dixit, Sunil, Dr.**
**Schulweg 6**
**D-2153 Neu Wulmstorf(DE)**

EP 0 393 535 B1

**Beschreibung**

Die Erfindung betrifft ein Verfahren zur Wiedergewinnung von Gummiabfällen (Elastomerabfällen) gemäß Oberbegriff des Anspruchs 1.

In der DE-A-37 19 291 wird das Verfahren zur Wiedergewinnung von vulkanisierten Abfällen, nämlich von Gummiabfällen, detailliert beschrieben. Dabei ist bekannt, daß zerkleinerte bzw. gemahlene Gummiabfälle mit einem Zusatz von Naturkautschuk als Binder versehen werden. Die Voraussetzung dafür ist, daß sich die Rohlinge auf dem Kalander oder im Extrusionsverfahren fertigen lassen.

Die Mischungen auf der Basis von Gummimehl und Naturkautschuk sind jedoch mangelhaft in ihrer Homogenität und Fließeigenschaften. Das Problem liegt hier in der Dispergierung des Binders im Gummimehl.

Die Aufgabe der Erfindung ist es daher, die Homogenität solcher Mischungen so zu verbessern, daß sie sich leicht zu Rohlingen verarbeiten lassen und gute Fließeigenschaften während der Vulkanisation aufweisen. Gelöst wird diese Aufgabe durch das Kennzeichen des Anspruchs 1 oder 2.

Durch die Verwendung des erfindungsgemäßen Harzes nach den Verfahrensvarianten I oder II, wobei das Einmischen sämtlicher Mischungsbestandteile auf der Walze erfolgt, wird die Dispersion des Binders so weit verbessert, daß die Fließeigenschaften der Mischung bis zu 50 % erhöht werden können, ohne daß hiermit eine Verschlechterung der Vulkanisat-Eigenschaften verbunden ist.

Dadurch wird eine leichte Fertigung der Rohlinge und des Vulkanisates ermöglicht. Ein zusätzlicher Vorteil ist das verbesserte Aussehen der Artikel.

Das folgende Beispiel bezieht sich auf die Wiedergewinnung von Gummiabfällen nach der Verfahrensvariante I, wobei aus Schlauchkrümmerabfällen Stallmatten hergestellt werden.

2

EP 0 393 535 B1

| Bestandteile | Gew.-% |
|---|---|
| Gummiabfall [a] | 71 |
| Mastiziermittel [b] | 0,1 |
| Naturkautschuk | 16 |
| Beschleunigersystem | |
|    Beschleuniger: CBS [c] | 0,4 |
|    Aktivator   : Stearinsäure | 0,2 |
|    Verzögerer  : PVI [d] | 0,2 |
| Zinkoxid | 0,7 |
| Schwefel | 3 |
| Weichharz [e] | 2,8 |

a) EPDM mit Verstärkungseinlagen

b) Renacit. (Wz. Firma Bayer AG)

c) Benzthiazyl-2-Cyclohexyl-sulfenamid

d) Firma Monsanto

e) Aussehen: zähflüssig

Spezifisches Gewicht: 1 g/cm$^3$

Viskosität: 80 mPa.s bei 80°C

Zusatz: verbatcht mit 5,6 Gew.-% Naturkautschuk

(die Gesamtmenge an Naturkautschuk beträgt

somit 21,6 Gew.-%)

**Patentansprüche**

1. Verfahren zur Herstellung von Grundmaterial zum Herstellen von Platten, Matten und Formartikeln aus Mischungen von gemahlenen Gummiabfällen mit oder ohne Verstärkungseinlagen, Mastiziermittel, Naturkautschuk, Beschleunigersystem, Zinkoxid und Schwefel, dadurch gekennzeichnet, daß der Gummiabfallmischung 2 bis 6 Gew.-%, insbesondere 2,5 bis 4 Gew.-%, eines aliphatisch aromatischen Weichharzes als zähflüssige Substanz mit einem spezifischen Gewicht von 0,8 bis 1,2 g/cm$^3$ und einer Viskosität von 60 bis 100 mPa.s bei 80°C zugefügt werden, wobei das Einmischen auf der Walze erfolgt (Verfahrensvariante I).

2. Verfahren zur Herstellung von Grundmaterial zum Herstellen von Platten, Matten und Formartikeln aus Mischungen von gemahlenen Gummiabfällen mit oder ohne Verstärkungseinlagen, Mastiziermittel, Naturkautschuk, Beschleunigersystem, Zinkoxid und Schwefel, dadurch gekennzeichnet, daß der Gummiabfallmischung 2 bis 6 Gew.-%, insbesondere 2,5 bis 4 Gew.-%, eines aliphatisch aromatischen Weichharzes in fester Form, verbatcht mit Kieselsäure, zugefügt werden, wobei das Einmischen auf der Walze erfolgt (Verfahrensvariante II).

3. Verfahren nach Anspruch 1, dadurch gekennzeichnet, daß das Harz ein spezifisches Gewicht von 1,0 g/cm$^3$ und eine Viskosität von 80 mPa.s bei 80°C aufweist.

3

**4.** Verfahren nach Anspruch 1 oder 3, dadurch gekennzeichnet, daß das Harz mit Naturkautschuk verbatcht ist.

**5.** Verfahren nach Anspruch 4, dadurch gekennzeichnet, daß der Mengenanteil von Harz zu Naturkautschuk etwa 1 : 2 beträgt.

**6.** Verfahren nach Anspruch 2, dadurch gekennzeichnet, daß der Mengenanteil an Kieselsäure 25 bis 40 Gew.-%, insbesondere 30 bis 35 Gew.-%, beträgt.

## Claims

**1.** A process for the production of basic material for the manufacture of plates, mats and moulded goods from mixtures of ground rubber waste with or without reinforcing fillers, masticating agents, natural rubber, accelerator system, zinc oxide and sulphur, characterised in that to the rubber waste mixture is added 2 to 6 % by weight, in particular 2.5 to 4 % by weight, of an aliphatic aromatic soft resin as viscous substance with a specific weight of 0.8 to 1.2 $g/cm^3$ and a viscosity of 60 to 100 mPa.s at 80°C, where the incorporation takes place on the roll (process variant I).

**2.** A process for the production of basic material for the manufacture of plates, mats and moulded goods from mixtures of ground rubber waste with or without reinforcing fillers, masticating agents, natural rubber, accelerator system, zinc oxide and sulphur, characterised in that to the rubber waste mixture is added 2 to 6 % by weight, in particular 2.5 to 4 % by weight, of an aliphatic aromatic soft resin in solid form, batched with silicic acid, where the incorporation takes place on the roll (process variant II).

**3.** A process as claimed in Claim 1, characterised in that the resin possesses a specific weight of 1.0 $g/c^3$ and a viscosity of 80 mPa.s at 80°C.

**4.** A process as claimed in Claim 1 or 3, characterised in that the resin is batched with natural rubber.

**5.** A process as claimed in Claim 4, characterised in that the quantity proportion of resin to natural rubber amounts to approximately 1:2.

**6.** A process as claimed in Claim 2, characterised in that the quantity proportion of silicic acid amounts to 25 to 40 % by weight, in particular 30 to 35 % by weight.

## Revendications

**1.** Procédé de préparation de matière de base pour la fabrication de plaques, de mats et d'articles moulés à partir de mélanges de déchets de caoutchouc broyés avec ou sans inclusions de renforcement, produits de mastication, caoutchouc naturel, système accélérateur, oxyde de zinc et soufre, caractérisé en ce qu'on ajoute, au mélange de déchets de caoutchouc, de 2 à 6% en poids, en particulier de 2,5 à 4% en poids, d'une résine souple aliphatique aromatique sous forme de substance semiliquide ayant une masse spécifique de 0,8 à 1,2 $g/cm^3$ et une viscosité de 60 à 100 mPa.s a 80°C, l'incorporation de la résine étant effectuée au cylindre malaxeur (variante I du procédé).

**2.** Procédé de préparation de matière de base pour la fabrication de plaques, de mats et d'articles moulés à partir de mélanges de déchets de caoutchouc broyés avec ou sans inclusions de renforcement, produits de mastication, caoutchouc naturel, système accélérateur, oxyde de zinc et soufre, caractérisé en ce qu'on ajoute, au mélange de déchets de caoutchouc, de 2 à 6% en poids, en particulier de 2,5 à 4% en poids, d'une résine souple aliphatique aromatique sous forme solide, lubrifiée à l'acide silicique, l'incorporation de la résine étant effectuée au cylindre malaxeur (variante II du procédé).

**3.** Procédé selon la revendication 1, caractérisé en ce que la résine présente une masse spécifique de 1,0 $g/cm^3$ et une viscosité de 80 mPa.s à 80°C.

**4.** Procédé selon la revendication 1 ou 3, caractérisé en ce que la résine est lubrifiée avec du caoutchouc naturel.

4

5. Procédé selon la revendication 4, caractérisé en ce que la proportion de la résine au caoutchouc naturel s'élève à 1 : 2 environ.

6. Procédé selon la revendication 2, caractérisé en ce que la proportion d'acide silicique se situe entre 25 et 40% en poids, en particulier entre 30 et 35% en poids.